(19) **Europäisches Patentamt / European Patent Office / Office européen des brevets**

(11) **EP 2 517 376 B1**

(12) **EUROPEAN PATENT SPECIFICATION**

(45) Date of publication and mention
of the grant of the patent:
**02.11.2016 Bulletin 2016/44**

(51) Int Cl.:
*H04B 7/08* (2006.01)    *H01Q 3/24* (2006.01)
*H04B 7/02* (2006.01)    *H04B 7/06* (2006.01)

(21) Application number: **09852651.0**

(22) Date of filing: **21.12.2009**

(86) International application number:
**PCT/SE2009/051470**

(87) International publication number:
**WO 2011/078750 (30.06.2011 Gazette 2011/26)**

(54) **METHOD FOR SUPPRESSING OPPOSITE DIRECTION INTERFERENCE**

VERFAHREN ZUR UNTERDRÜCKUNG VON INTERFERENZEN AUS DER ENTGEGENGESETZTEN RICHTUNG

PROCÉDÉ DE SUPPRESSION D'UNE INTERFÉRENCE DANS DES DIRECTIONS OPPOSÉES

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**31.10.2012 Bulletin 2012/44**

(73) Proprietor: **Telefonaktiebolaget LM Ericsson (publ)**
**164 83 Stockholm (SE)**

(72) Inventors:
• **SELÉN, Yngve**
**S-754 34 Uppsala (SE)**
• **WERNER, Karl**
**141 72 Segeltorp (SE)**
• **SIOMINA, Iana**
**S-170 66 Solna (SE)**
• **BEHRAVAN, Ali**
**S-113 61 Stockholm (SE)**

(74) Representative: **Ericsson**
**Patent Development**
**Torshamnsgatan 21-23**
**164 80 Stockholm (SE)**

(56) References cited:
**WO-A2-98/16077    US-A1- 2005 221 861**

• **LI, JUNSONG ET AL.: 'Dynamic TDD Fixed Cellular Systems Using Smart and Sectored Antennas' INTERNATIONAL JOURNAL OF WIRELESS INFORMATION NETWORKS, [Online] vol. 9, no. 4, October 2002, pages 227 - 241, XP003028119 Retrieved from the Internet: <URL:http://cictr.ee.psu.edu/facstaff/kaveh rad/Papers/Dynamic-TDD-Kav-Valenzuela.pdf>**
• **KRAIRIKSH M. ET AL: 'Phased array of switched-beam elements and its applications' APPLIED ELECTROMAGNETICS CONFERENCE (AEMC), 2009 14 December 2009 - 16 December 2009, pages 1 - 4, XP031648340**
• **NGAMJANYAPORN P. ET AL: 'Signal-to-interference ratio improvement by using a phased array antenna of switched-beam elements' ANTENNAS AND PROPAGATION, IEEE TRANSACTIONS ON vol. 53, no. 5, May 2005, pages 1819 - 1828, XP011131582**
• **MUGEN PENG ET AL.: 'Investigation of TDD and FDD CDMA coexistence in the macro environment employing smart antenna techniques' COMMUNICATIONS, 2004 AND THE 5TH INTERNATIONAL SYMPOSIUM ON MULTI-DIMENSIONAL MOBILE COMMUNICATIONS PROCEEDINGS. THE 2004 JOINT CONFERENCE OF THE 10TH ASIA-PACIFIC CONFERENCE ON vol. 1, 29 August 2004 - 01 September 2004, pages 43 - 47, XP010765130**

**Description**

TECHNICAL FIELD

The present invention relates to interference reduction in a wireless communications system, and in particular to interference reduction in a communications system applying mixed mode TDD (Time Division Duplex).

BACKGROUND

In communications systems operating in TDD (Time Division Duplex) mode it is possible to change the balance between UL (uplink) and DL (downlink) by adapting the time slots allocated to each type of transmission (e.g., if more UL is needed, some slots which were previously used for DL may be changed to UL instead, or vice-versa). This is a simple and powerful method for adapting the performance of the communications system to the current need of its users. However, in a cellular system this may lead nearby cells to operate in different modes at the same time instant, i.e., one cell receives (UL) when another nearby cell transmits (DL). This scenario will be called "mixed mode TDD" hereinafter. Cellular TDD systems are usually synchronized to avoid this type of behavior for a number of reasons. One potential problem with mixed mode TDD is that the DL cell causes interference to the UL cell. The interference may be significant since there usually is a significant imbalance between the power levels for UL and DL. Consequently a DL transmission in an adjacent cell may easily "drench" any UL traffic.

In the international patent application WO 2008/008013 A1 a prior art method for reducing the interference in an UL cell from nearby DL transmissions is described. In that prior art method, information on DL signals to be transmitted is sent to a device which will receive data in the UL. This device, operating in UL mode, can then use the information to reduce or cancel interference. Thus this solution focuses on how information related to the particular data being transmitted can be used for interference reduction. The interference reduction method discussed in WO 2008/008013 A1 may not be sufficient to obtain low enough interference levels. Furthermore, even if an interfering signal could be cancelled in baseband, a high power of the interference may saturate analog components and analog to digital circuitry, and hence make cancellation in baseband according to this method unfeasible.

A number of other prior art methods for interference reduction for mixed mode TDD are described in the article "Suppressing Opposite-Direction Interference in TDD/CDMA Systems With Asymmetric Traffic by Antenna Beamforming," by Chen, Chiung-Jang and Wang, Li-Chun, IEEE Transactions on Vehicular Technology, Vol. 53(4), July, 2004. These methods apply beamforming for reducing the interference a transmitting base station (BS) causes to a receiving BS. Both transmit and receive beamforming are considered. In transmit beamforming the transmitted signal energy can be focused in certain directions, and reduced in others, whereas in receive beamforming the energy can be received selectively from certain directions, and attenuated in others. In all of the prior art methods disclosed in the above-mentioned article it is assumed that the desired directions are known, and a minimum variance distortionless response (MVDR) beamformer, or a so called Capon beamformer is then suggested as a receive beamformer aimed at minimizing signal energy received from all other directions. Conventional beam-steering is suggested for transmit beamforming.

The prior art methods in the above-mentioned article may however be associated with a number of problems. The MVDR beamformer suggested as receive beamformer is known to be sensitive to antenna misconfiguration, measurement errors, and uncertain directions. For instance, if a receiving base station listens to a user equipment (UE) which it believes has the direction $\varphi$, but the true UE direction is $\varphi + \delta$, the MVDR beamformer will actually try to cancel the desired signal which can reduce the received SNR (Signal-to-noise ratio) significantly, also for relatively small values of $\delta$. Also, the conventional beam steering technique suggested for transmit beamforming in the article may still radiate significant energy in the direction of another BS operating in UL mode, thereby causing large interference levels to that other BS. Furthermore, the prior art methods in the above-mentioned article does not address the problem of obtaining channel estimates.

SUMMARY

An object of the present invention is to provide an alternative method and an alternative arrangement that allow for interference reduction in mixed mode TDD communication systems.

The above stated object is achieved by means of a method and a fixed communication node according to the independent claims.

A basic idea of embodiments of the present invention is to perform interference reduction by appropriate selection of antenna weights. However in contrast to prior art methods antenna weights are selected based on stored interference channel information on interference channels between fixed communication nodes. It is transmissions from fixed communication nodes that are the major sources of interference. Basing interference reduction primarily on interference channel information relating to fixed communication nodes allows for different degrees of precomputation in advance, prior to actually carrying out the interference reduction.

A first embodiment of the present invention provides a method in a network node for use in a wireless communications system operating in TDD mode. The method comprises storing interference channel information on a number of interference channels between a fixed communication node and a number of other fixed communication nodes. Furthermore the method comprises performing interference reduction between the fixed communication node and a set of the other fixed communication nodes by antenna weight selection for a plurality of antenna elements of the fixed communication node. The antenna weight selection is based on the stored interference channel information relating to the set of the other fixed communication nodes.

A second embodiment of the present invention provides a fixed communication node for use in a wireless communications system operating in TDD mode. The fixed communication node comprises a plurality of antenna elements and a memory unit for storing interference channel information on a number of interference channels between the fixed communication node and a number of other fixed communication nodes. The fixed communication node also comprises a processing unit. The processing unit is adapted to store the interference channel information in the memory unit, and to perform interference reduction between the fixed communication node and a set of the other fixed communication nodes. This interference reduction is performed by antenna weight selection based on the stored interference channel information relating to the set of the other fixed communication nodes.

An advantage of embodiments of the present invention is that they allow for reducing the interference from transmitters to receivers which thus enables the entire network to be dimensioned according to the general UL/DL balance (typically more DL than UL), while still enabling increased UL or DL capacity when required at certain cells.

Another advantage of embodiments of the present invention is that they allow for interference reduction based on interference channel information relating to fixed communication nodes. This means that the interference channel information may be measured or collected in some other way e.g. at times when the system load is low and then stored for later use when it is desirable to perform the actual interference reduction. The actions to be performed at the time of carrying out the actual interference reduction can thus be made simpler compared to some prior art methods that may involve both measurements and complicated computations that need to be performed quickly. In contrast, according to certain embodiments of the present invention it is e.g. possible to pre-compute transmit or receive antenna weights in advance to support carrying out interference reduction quickly and easily without heavy computations on-line. It should also be noted that, for a TDD system employing the same antennas for transmission and reception, the channels between fixed communication nodes are reciprocal, i.e., knowledge of a channel between two nodes in one direction gives perfect knowledge of the corresponding channel in the opposite direction, and vice-versa. One can simplify the interference channel information collection process by taking this into account.

A further advantage is that, compared to prior art methods, the interference reduction based on stored interference channel information relating to fixed communication nodes according to embodiments of the present invention becomes less sensitive to uncertain directions of the desired transmitting or receiving node (which usually is mobile and thus its direction is more difficult to determine). Embodiments of the present invention focus primarily on interference reduction in view of the major sources of interference (which are fixed communication nodes) rather than on the transmitter or receiver of the desired signal.

Yet another advantage of embodiments of the present invention is that they allow for interference reduction without any knowledge of the actual data being transmitted. This means that procedures for making data transmitted from one fixed communications node known to other fixed communications nodes need not be implemented. However, embodiments of the present invention may be combined with prior art methods that perform interference reduction based on information on the transmitted data signals to achieve even better interference reduction.

Yet a further advantage of embodiments of the present invention is that the antenna weights can be set in the analog circuitry of the communication nodes. Hence, the interference can be reduced prior to digitizing the signal at the receiver, and the risk of saturating analog components and analog to digital circuitry is reduced, compared to doing the processing in baseband.

Further advantages and features of embodiments of the present invention will become apparent when reading the following detailed description in conjunction with the drawings.

BRIEF DESCRIPTION OF THE DRAWINGS

Fig. 1 is a schematic block diagram illustrating a wireless communication system in which embodiments of the present invention may be implemented.
Fig. 2 is a diagram which illustrates beamforming gain versus the angle in degrees for a two antenna element case.
Fig. 3 is a schematic block diagram illustrating a fixed communication node according to an embodiment of the present invention.

Fig. 4 is a flow diagram illustrating a method for interference reduction according to an embodiment of the present invention.

Fig. 5 is a schematic block diagram of a wireless communication system in which embodiments of the present invention are applied to achieve interference reduction across a plurality of cells.

Fig. 6 is a flow diagram illustrating parallel methods for interference reduction in two or more base stations according to alternative embodiments of the present invention.

## DETAILED DESCRIPTION

The present invention will now be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. In the drawings, like reference signs refer to like elements.

Throughout this application the term "fixed communication node" is used to refer to a node with a fixed location, which is provided with means for wireless communication over a radio interface. A fixed communication node may e.g. be a base station, a repeater or a relay. The term "network node" is used herein to refer to a node which may be a fixed communication node, an operation and maintenance node, or other type of centralized network node that support the operation in other network nodes. A "mobile node" is a node without a fixed location, which is provided with means for wireless communication over a radio interface. The mobile node may e.g. be a mobile terminal or some other type of mobile user equipment (UE). The term "desired receiving node" will be used herein to refer to an intended receiver of a DL signal and the term "desired transmitting node" will be used to refer to a node transmitting a desired UL signal. The terms "desired receiving nodes" and "desired transmitting nodes" may thus both encompass mobile nodes such as UEs as well as fixed communication nodes.

The above described prior art methods for interference reduction in mixed mode TDD systems perform interference reduction by utilizing either knowledge about the transmitted DL signal or knowledge about the desired direction, i.e. the direction of the source of the desired UL signal or the direction of the intended receiver of the desired DL signal. In contrast embodiments of the present invention perform interference reduction by primarily utilizing knowledge about the main sources of so-called opposite-direction interference. In case of opposite-direction interference, the desired signal is in the uplink direction, while the interference is from the downlink direction. The source of the interference is a fixed communication node; generally a base station but it can also be e.g. a repeater or relay. Since the sources of interference have fixed locations it is possible to collect and store information regarding interference channels between a fixed communication node and a number of other fixed communication nodes in advance, e.g. at night when the load is usually low. This interference channel information can then be retrieved and utilized at a later point in time when it is desired to perform interference reduction. By basing the interference reduction on pre-stored interference channel information it is possible to allow for quicker and simpler computations on-line.

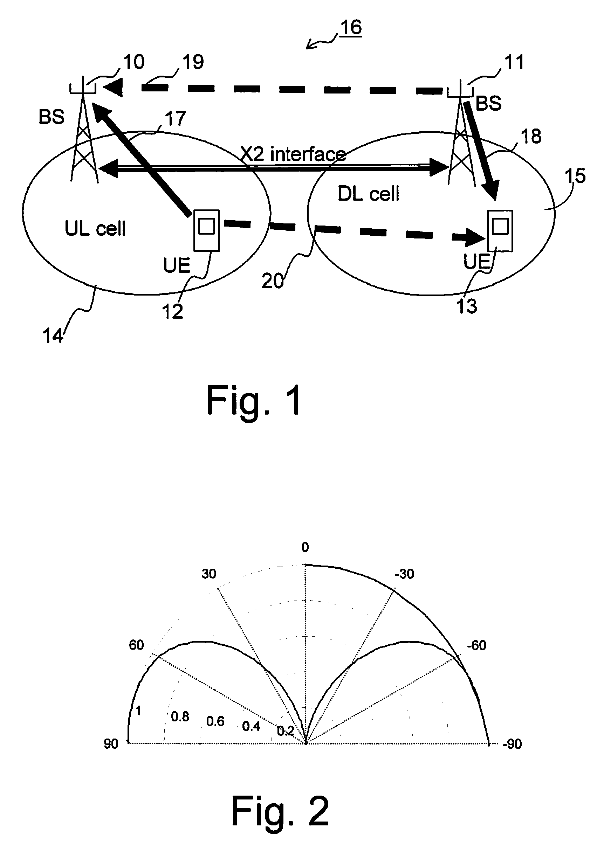

Fig. 1 is a schematic block diagram of a wireless communications system (16) operating in mixed mode TDD in which embodiments of the present invention may be used for interference reduction. The aim is to efficiently reduce the interference caused by a DL transmission from one or several fixed communications nodes on one or several UL receptions in other (nearby located) fixed communications nodes. In Fig. 1, for simplicity, only two fixed communications nodes 10, 11 are illustrated, which in this example are two base stations (BSs) serving nearby located cells 14 and 15. The base stations 10, 11 each communicate with a respective UE 12, 13. The base station 10 is receiving in UL from the UE 12, and the base station 11 is transmitting in DL to the UE 13. During a "joint UL/DL TDD subframe" unwanted signals, i.e. interference, will arise as marked by dashed arrows 19 and 20 in Fig. 1. The desired uplink signal 17 and the desired downlink signal 18 are marked by solid arrows. It is assumed herein that the interference channel 20 between the UE 12 and the UE 13 is weak, so the interference caused by the UL transmission from the UE 12 does not significantly affect the DL reception for the UE 13. The interference on the interference channel 19 between the base station 11 and the base station 10 can be reduced by means of embodiments of the present invention to reduce the impact of the DL signal from the BS 11 on the reception by the BS 10. Reducing the BS-BS interference may enhance the attractiveness of flexible UL/DL allocation of frames for individual cells in a TDD cellular network, i.e., of mixed mode TDD.

Embodiments of the present invention allow for interference reduction by antenna weight selection for a plurality of antenna elements of fixed communication nodes, such as BSs, operating in DL mode or in UL mode. Antenna weight selection is related to beamforming. Beamforming is usually seen as a subset of general antenna weight selection as will be explained in greater detail below. The antenna weight selection is based on stored interference channel information regarding interference channels between the fixed communication node for which antenna weights are to be selected and a set of other fixed communication nodes. The stored interference channel information may be information on the directions and/or channels between the fixed communication nodes.

At least some embodiments implement a specific measurement protocol, described in detail below, in which the interference channels between different fixed communication nodes and/or the directions to different fixed communication nodes (measured from a certain reference, e.g., the normal of the antenna plane) are measured during times of low activity (e.g., night time or special time frames designed to improve signal hearability). Since the fixed communication nodes are static, the channels and/or directions can be measured with high precision and be stored in a database. The corresponding values can then be retrieved from that database when applying the discussed scheme for reducing the interference, as described below. Similarly, appropriate transmit and receive beamformers or antenna weights can be precomputed, based on these measurements, for a number of desired transmit and receive directions or antenna weights, and stored in a database where they can be easily retrieved for fast on-line implementation.

In this detailed description transmissions will in most cases be exemplified in a nonlimiting manner as transmissions between BSs and UEs. In a more general context, the transmissions take place between communication nodes, where at least one of them has a fixed location. Typically, some or all of these fixed communication nodes will be BSs, but some may also be other types of nodes, such as relays or repeaters. Some nodes may be present for which the position is neither fixed nor known with a high precision, e.g., UEs which are mobile.

In a cellular system with fixed BS locations, the channels between any pair of neighboring BSs can be accurately estimated. Assume that a UE, say the UE 12, is transmitting a vector $x^{\uparrow}$ (one element per transmit antenna) over a channel $H^{\uparrow}$ to the associated BS 10. At the same time, each of N other nearby BSs (e.g. the BS 11 in Fig. 1), say BSi, where i = 1, ..., N, are transmitting, in the same resource (a resource could be a code or a certain frequency/subcarrier, at a certain time instant) the corresponding vectors $z_i^{\downarrow}$ which each reach the BS 10 via the corresponding interference channels $G_i^{BS}$ (e.g. the interference channel 19 in Fig. 1). The signal vector (one element per receive antenna) received by BS0 then becomes

$$y^{\uparrow} = H^{\uparrow}x^{\uparrow} + \sum_{i=1}^{N} G_i^{BS}z_i^{\downarrow} + e^{\uparrow} \qquad (1)$$

where $e^{\uparrow}$ denotes a noise vector that describes any additional noise and interference. In many situations the interference term will dominate over the desired signal part $H^{\uparrow}x^{\uparrow}$ (i.e., the SIR (signal-to-interference ratio) becomes very low). This is one important reason why UL/DL synchronization across cells often is used.

Now, assume that the BS 10 knows $z_i^{\downarrow}$ and has estimates $\hat{G}_i^{BS}$ of channel matrices for $G_i^{BS}$. Then, the BS 10 can cancel the interference caused by the BSs, BSi, i = 1, ..., N by removing the estimated interference from the received signal:

$$\bar{y}^{\uparrow} = y^{\uparrow} - \sum_{i=1}^{N} \hat{G}_i^{BS}z_i^{\downarrow} = H^{\uparrow}x^{\uparrow} + \sum_{i=1}^{N} (G_i^{BS} - \hat{G}_i^{BS})z_i^{\downarrow} + e^{\uparrow}. \qquad (2)$$

If the estimates of the channels $G_i^{BS}$ are accurate, then the interference term $\sum_{i=1}^{N} (G_i^{BS} - \hat{G}_i^{BS})z_i^{\downarrow}$ becomes small, and the BS 10 can proceed operating on the signal vector $\bar{y}^{\uparrow}$, which should have significantly higher SINR (signal-to-interference + noise ratio) than the vector $y^{\uparrow}$. It is possible to find good channel estimates between BSs since the BSs themselves have static locations and can use long measurement periods for channel estimation.

The international patent application WO 2008/008013 discloses interference reduction based on (2). In many practical cases, the interference term in the signal $\bar{y}^{\uparrow}$ will not be insignificant and, in particular, it may still be much larger than the signal part $H^{\uparrow}x^{\uparrow}$. The reason for this is the significant power imbalance between BSs and UEs: BS transmit powers are on the orders of tens of dBs greater than those of UEs. This calls for additional methods for reducing the magnitude of the interference term $\sum_{i=1}^{N} G_i^{BS}z_i^{\downarrow}$. This is precisely what embodiments of the present invention are aiming at.

The BS positions are fixed, and the radio channels between them typically have a very limited time variation. Hence the channels between the BSs can be accurately estimated at times of low load, e.g., at night. The BSs may for instance, one at a time or with a low probability to avoid collisions, send "reference signals", which are known to the neighboring BSs. These BSs may then estimate their channels to the transmitting BSs, similarly to how UEs estimate the channel to their serving BS in the 3GPP (3rd Generation Partnership Program) LTE (Long Term Evolution) standard using reference symbols. In this special case, a very dense pattern of reference symbols may be used, e.g., one may use all available resource elements, since no data needs to be transmitted simultaneously. Alternatively, signals transmitted during normal operation may be used for the channel estimation, if they are known to the receiving BS, for example through communication using another interface such as the X2 interface or fixed or wireless backhauling links. When estimating channels from another BS, the estimating BS must not transmit on the same resource. Note that in this measurement procedure the channel reciprocity in TDD can be exploited, as mentioned earlier.

Regardless of whether the channels can be estimated with enough accuracy or not, the directions to one or several transmitting BSs (in terms of propagation paths), relative to one or more receiving BSs, can be accurately estimated by spatial spectral estimation, or possibly they may be programmed into the BS when it is installed. In spatial spectral estimation, the power received at a BS is determined for a number of different directions such that power spectral densities over angle are obtained at the receiving BSs. This can be performed in the vertical and horizontal domain separately to facilitate beamforming in both these domains. E.g., receive beamforming, as described below, can be performed for a large number of angles, and the angle(s) for which the energy is large then corresponds to the directions of the transmitting BS(s).

The above text gives some descriptions and indications as to how information regarding interference channels between nearby BSs can be obtained and stored. This interference channel information can be of different levels of detail, such as channel estimates or simpler direction information. In the remaining part of the detailed description it will be assumed that the interference channels or their directions are available, whether estimated as described above, or obtained in some other way. Further, it will be assumed that the BSs know which nearby BSs will receive in UL and which BSs will transmit in DL. This information may, e.g., be received by signaling from the network or directly from the nearby BSs.

Note that, additionally, channels between fixed communication nodes which are not BSs, but which still have a fixed position, such as repeaters and relays, can be measured and stored similarly to channels between BSs. Hence, embodiments of the present invention apply also to such fixed communication nodes.

Transmit beamforming is a well known concept for directing signal energy by means of a calibrated antenna array. The same concept can also be used for selectively receiving signal energy from certain directions; this is called receive beamforming. Beamforming is usually seen as a subset of a more general antenna weight selection, where different antennas in a joint transmission are given different complex weights. For illustrative purposes, we first describe the beamforming approach, and then a more general form of antenna weight selection. Below, beamforming in one domain is described. It should be understood that this type of beamforming can, depending on the antenna configuration, be separately used in several domains simultaneously, e.g., the vertical and horizontal domains, for improved directivity.

Assume that a uniform linear array consisting of M antenna elements is available. A uniform linear array consists of antenna elements positioned equidistantly on a straight line. (The concepts to be described herein will hold also for other antenna configurations, but the exposition can become significantly more complex for them.) By imposing a spatial filter, imposing different phase shifts and/or scaling on different antenna elements, a received or transmitted signal can be focused in some direction(s) depending on the selected spatial filter.

Now, the beamforming concept in general is briefly described. More details about beamforming can be found in "INTRODUCTION TO SPECTRAL ANALYSIS," Chapter 6, by Stoica, Petre and Moses, Randolph, Prentice-Hall, Upper Saddle River, NJ, 1997.

Denote by $\theta$ the direction of interest, $\theta \in [-\pi, \pi)$, where $\theta$ is the angle in radians relative to the normal of the line along which sensors are spaced. Then, one may define a spatial filter, $h = a(\theta) = [1\ e^{-j\omega(\theta)}\ ...\ e^{-j(M-1)\omega(\theta)}]^T$, where a($\theta$) is called steering vector (here, j denotes the complex unity). The spatial frequency is denoted by $\omega(\theta) = \rho \dfrac{d \sin \theta}{c}$ where d is the distance between the antenna elements, $\rho$ is the carrier c angular frequency, and c is the propagation speed of the radio waves in the medium. Let t denote a time index. A desired signal stream, s(t), (s(t) is a scalar (possibly complex)) can then be mapped on the different antenna elements using the spatial filter h such that the output from the antenna array becomes the vector y(t) = hs(t) = a($\theta$)s(t). The signal stream s(t) is then focused in the $\theta$ direction. Similarly, a receiver can focus its received energy in a desired direction $\theta$ by combining a measured signal vector $y_r$(t) in a scalar signal $s_r(t) = h^H y_r(t) = a^H(\theta)y_r(t)$ where $()^H$ denotes the Hermitian transpose.

The above description is concerned with the special form a($\theta$) of the spatial filter h, which focuses the signal energy in a specific direction $\theta$. Other expressions and design criteria can be used for h. For instance, if one wishes to minimize the energy transmitted in, or received from, a certain direction $\theta$ the spatial filter should be designed such that $h^H a(\theta) = 0$. This is sometimes denoted as "placing a null" in the direction $\theta$. In a transmission one may desire to focus the energy in one direction (towards the receiver of a signal) while placing "nulls" in other directions (where the interference should be low). A simple example of beamforming is illustrated in Fig. 2. The beamforming gain is shown versus the angle in degrees, and here a null has been set at angle $\theta = 0$. The angles are relative to the normal of the line on which the antennas are positioned (horizontal in the figure). This simple example is for a 2 antenna element case in which the single degree of freedom was used to place the null. If more antenna elements are available, the shaping of the gain pattern can be more elaborate.

Thus, according to an embodiment of the present invention, a transmitter beamforming on the cells transmitting in DL could target the following: (a) minimize the interference to the UL cell by placing a null in the known direction $\theta_0$ of the UL BS 10, or at least guaranteeing that $|h^H a(\theta_0)|$ has a low value; (b) maximize the signal power in the direction $\theta_d$ of a desired receiver by directing a beam towards the direction $\theta_d$, i.e., making $|h^H a(\theta_0)|$ large (the available output power will put an additional constraint on h). Note that, with M antenna elements in the antenna array, the transmitter will have M-1 degrees of freedom, in the sense that it can place M-1 nulls or beams. A large degree of freedom can be useful, e.g., if there are reflectors in the environment, such as big buildings, which give several directions (or paths) for which the path loss to the UL BS 10 is low.

As described above, antenna weight selection (beamforming) can be used in the transmission by a BS, say the BS 11; a null can be placed in the direction of the BS 10, such that the interference caused by the BS 11 to the BS 10 becomes low. If there are several BSs one wishes to avoid interfering, BS1, ..., BSN in the directions $\theta_i$, i = 1, ..., N a null can be placed in the direction of each of them provided enough degrees of freedom are available. A spatial filter $\hat{h}$ aiming at transmitting the signal in the direction $\theta_d$ while nulling the directions $\theta_i$, i = 1, ..., N could then be designed according to $\hat{h}$ = arg max$_h$ $|h^H a(\theta_d)|$, subject to $|h^H a(\theta_i)| \le \varepsilon_i$ for all i = 1, ..., N and $|h^H h| \le P$ where the last constraint is a power constraint added to avoid the scaling h by an arbitrary large number (which is not possible, since the BS is power constrained) and $\varepsilon_i$ is set to 0 to null $\theta_i$, but $\varepsilon_i$ can also be a larger number if a pure nulling is not required. Of course, other ways to design the spatial filter with the goal of minimizing the interference caused to the (known) directions $\theta_i$, i = 1, ..., N are also possible according to embodiments of the present invention. Examples could be "soft" nulls, where one does not require $h^H a(\theta_i) = 0$, but instead tries to obtain a good compromise between obtaining a large value of $|h^H a(\theta_d)|$ and low values of $h^H a(\theta_i)$, e.g.,

$$\hat{h} = \text{arg max}_h\ |h^H a(\theta_d)| - \Sigma c_i |h^H a(\theta_i)|^m \text{ subject to } |h^H h| \le P$$

where $c_i$ are positive weighting constants which express how relevant it is to suppress a beam in the corresponding directions, and the exponent m is a design parameter. Values for $c_i$ could, e.g., be based upon the channel strengths to the corresponding BSs or the corresponding receive weights at the interfered BSs, so that BSs that are unable to efficiently cancel the interference are more important in the criterion.

More generally, by precoding, the DL signal 18 from the BS 11, $z_i^\downarrow$, can be sent in, or almost in, the null space of the estimated channels between the BS 11 and some other BSs, BSj, j = 1, ..., J, which are receiving data (here the BSs have been indexed such that BSj, j = 1, ..., J, are all receiving data, such as e.g. BS 10 in Fig. 1), such that $z_i^\downarrow \in null(\hat{G}_j^{BS})$ or $\|\hat{G}_j^{BS} z_i^\downarrow\| \approx 0$, for j = 1, ..., J. Simultaneously, it is preferable to make sure that the signal is not too weak at the receiving UE (if possible). One example of a useful optimization formulation to select appropriate antenna weights W could then be

$$\hat{W} = \text{arg max}_W \left\| \hat{H}W \right\| - \sum_{j=1}^{J} c_j \left\| \hat{G}_j^{BS} W \right\| \text{ subject to Tr}(WW^H) \le P.$$

Here the antenna weights W are used such that $z_i^\downarrow$ = Wy and y is the signal prior to the mapping on the antenna elements. $\hat{H}$ denotes the estimated channel to the desired receiving node, e.g. the UE 13. Assuming that the desired receiving node is a UE, this DL transmission should then preferably be directed towards the UE with the "most orthogonal" channel if such information is available (or to an arbitrary UE if the corresponding information is not available; if this UE turns out to receive the signal poorly, another UE may be selected next time), or to the UE wanting to receive data for which the function to be maximized above gets the highest value. For instance, if there are M candidate desired receiving nodes (UEs in this example) for which the corresponding channel estimates $\hat{H}_j$, j = 1, ..., M are known, one may select j and W jointly according to

$$\{\hat{W}, \hat{j}\} = \text{arg max}_{W, j \in \{1,...,M\}} \left\| \hat{H}_j W \right\| - \sum_{i=1}^{N} c_i \left\| \hat{G}_i^{BS} W \right\| \text{ subject to Tr}(WW^H) \le P$$

where $c_i$ are again positive weighting constants. Alternatively, some other optimization criterion similar to those discussed above for beamforming may be used.

It was mentioned above that receive beamforming may be used to selectively receive signal energy from certain directions. It will now be specifically described how receive beamforming can be used at the BS 10 receiving data in UL to reduce the interference from N nearby BSs, BS1, ..., BSN, transmitting in the DL (such as the BS 11).

The transmitting BSs, are located at angles $\theta_i$, i = 1, ..., N, from the BS 10. Then the BS 10 wants to reduce the interference as much as possible to these directions. This can be done, e.g., by receive beamforming, in which a spatial filter $\hat{h}_r$ is selected with the conditions that $|\hat{h}_r{}^H a(\theta_i)|$ should be small for all i = 1, ..., N. Also, if possible, the spatial filter $\hat{h}_r$ should give a large gain towards the direction of the signal of interest $\theta_d$, if known, i.e., $|\hat{h}_r{}^H a(\theta_d)|$ should be large. For instance, if more than N antenna elements are available, the filter $\hat{h}_r$ could be constructed according to the following optimization:

$$\hat{h}_r = \arg \max_h |h^H a(\theta_d)|, \text{ subject to } |h^H a(\theta_i)| \leq \varepsilon_i \text{ for all } i = 1, ..., N \text{ and } |h^H h| \leq P$$

where the last constraint was added to avoid the scaling of $\hat{h}_r$ by an arbitrary large number (which will not affect received SINR, since both noise and interference are also scaled) and $\varepsilon_i$ is set to 0 to null $\theta_i$, but $\varepsilon_i$ can also be a larger number if a pure nulling is not required. Another possible solution, if the signal of interest direction $\theta_d$ is known, or estimated, is

$$\hat{h}_r = \arg \min_h |h^H h|, \text{ subject to } |h^H a(\theta_i)| \leq \varepsilon_i \text{ for all } i = 1, ..., N \text{ and } h^H a(\theta_d) = 1$$

where the spatially white noise influence is minimized with the constraints of placing nulls in the directions of the interferers and setting unity gain in the direction of the desired signal source. Another way of reducing the interference, which is possible also with fewer than N receive antenna elements, could be

$$\hat{h}_r = \arg \min_h |h^H h| + \Sigma c_i |h^H a(\theta_i)|^m, \text{ subject to } h^H a(\theta_d) = 1$$

where the $c_i$ are user selected constants by which different weights can be given to the different interferers (e.g., based upon the associated path loss or similar) and m is an exponent taking, e.g., the values 1 or 2. Many other ways of reducing the interference, similar to the ones described above, can be envisioned. Some of the above expressions can be interpreted as additionally constrained MVDR beamformers, which is different from the suggestion in the above mentioned article "Suppressing Opposite-Direction Interference in TDD/CDMA Systems With Asymmetric Traffic by Antenna Beamforming," by Chen, Chiung-Jang and Wang, Li-Chun, IEEE Transactions on Vehicular Technology, Vol. 53(4), July, 2004. In this article, the normal MVDR beamformer, with only the constraint $h^H a(\theta_d) = 1$ was suggested for receive beamforming. In the exemplary embodiments above, additional constraints or factors related to minimizing the signal received from the known active BS directions $\theta_i$, i = 1, ..., N (assuming N BSs are transmitting in the current slot) are considered. In this sense the exemplary embodiments herein exploit information regarding the main sources of interference (i.e. nearby transmitting BSs or other types of fixed communication nodes), and should hence enable better performance. In addition, it could be advantageous to use robust versions of additionally constrained MVDR/Capon beamformers, along the lines described in the article "On Robust Capon Beamforming and Diagonal Loading," by Li, Jian and Stoica, Petre and Wang, Zhisong, IEEE Transactions on Signal Processing, Vol. 51(7), July, 2003, to be able to better cope with, e.g., errors in $\theta_d$.

Provided estimates of the interference channels $G_i^{BS}$ are available for all transmitting BSs from which one would like to reduce the interference (indexed 1, ..., N), the receiving BS can select antenna weights $\hat{W}_r$ which aim at

minimizing $\sum_{i=1}^{N} |W_r{}^H \hat{G}_i^{BS}|^m$ for some value of m, similar to the expressions above. For instance, if possible $\hat{W}_r$ can be

set in the null space of the interference channels. Similarly to the case of transmit antenna weight selection above, an expression of the type

$$\{\hat{W}_r, \hat{j}\} = \arg \max_{W, j \in \{1,...,M\}} |\hat{H}_j W| - \sum_{i=1}^{N} c_i |\hat{G}_i^{BS} W| \text{ subject to } \mathrm{Tr}(WW^H) \leq P$$

may be used to select the receive antenna weights $\hat{W}_r$ and select the index $\hat{j}$ of the UE (or other type of desired transmitting node) to be scheduled simultaneously.

The exemplary embodiments described above show some suggestions for how to design beamformers and/or precoders when the interference directions or the interference channels between the BSs or fixed communication nodes are known. It is possible that some of the suggested optimization problems for designing the beamformers are computationally complex. This does not pose any problem, however, as the beamformers can be designed "off-line" (i.e., prior to their use) and stored in a database. The parameters that affect the beamformers are the directions to the nearby BSs, $\theta_i$, i = 1, ..., N, which are static (although different beamformers will be designed for different sets of BSs operating in the other transmission mode (UL vs. DL)), and the desired direction $\theta_d$ which will vary. However, the precision is likely not that high anyway (the UE position is uncertain), and the beamformers can be pre-designed for different combinations of $\theta_i$, i = 1, ..., N, over a grid for $\theta_d$ (i.e. a limited number of possible desired directions/locations). Similarly, general antenna weights W can be computed offline in the same manner for discrete values of channel estimates $\hat{H}$.

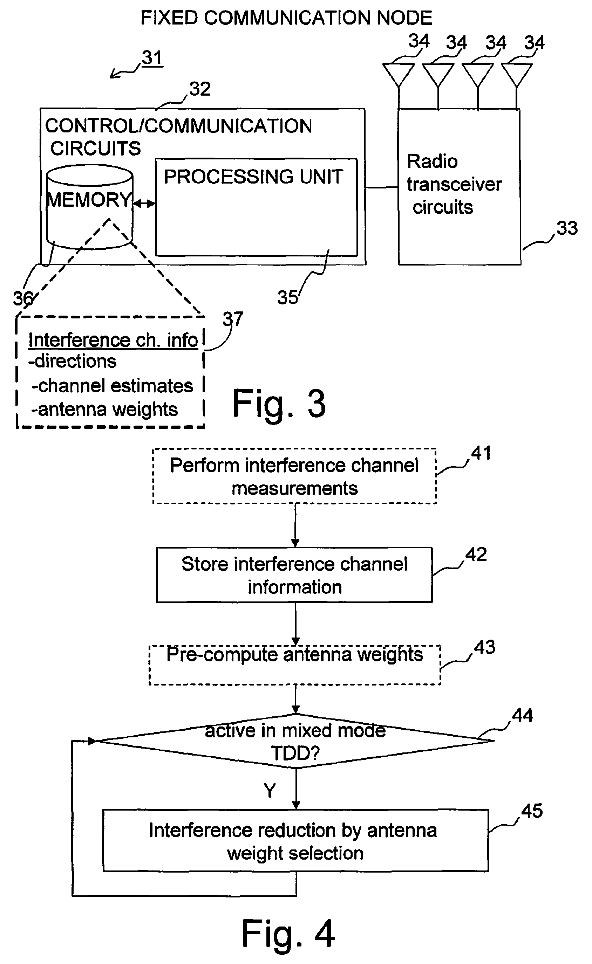

Fig. 3 is a schematic block diagram illustrating a fixed communication node 31 according to an embodiment of the present invention. The fixed communication node includes control/communication circuits 32, radio transceiver circuits 33 and a plurality of antenna elements 34. Processing unit/circuits 35 is adapted to store the above mentioned interference channel information 37 (such as directions and/or channel estimates) in a memory unit/circuits 36. In case antenna weights are pre-computed offline as mentioned above, the interference channel information 37 may comprise pre-computed antenna weights for different combinations of fixed communication nodes operating in opposite mode and different desired directions. The processing unit 35 is furthermore adapted to perform interference reduction as described above by means of selecting appropriate antenna weights based on stored interference channel information. As will be apparent to a person skilled in the art different components of the fixed communication node 31 may be realized by means of software, hardware, firmware or combinations thereof. The memory unit 36 is illustrated in Fig. 3 as an integral part of the control/communication circuits but it is also possible that the memory unit 36 is located in e.g. a centralized network node. The relocated memory unit would then be part of a distributed fixed communication node. It will furthermore be apparent to the person skilled in the art that although parts of the fixed communication node 31 are illustrated as separate units or circuits in Fig. 3 it is also possible for several parts to be physically integrated.

Fig. 4 is a schematic flow diagram of a method for interference reduction according to an embodiment of the present invention. In a step 42 interference channel information on a number of interference channels between a fixed communication node and a number of other fixed communication nodes is stored. The interference channel information may e.g. include channel estimates or directions as mentioned above. The step 42 may optionally have been preceded by a step 41 in which interference channel measurements were performed to estimate the interference channels from which the interference channel information to be stored is derived. When mixed mode TDD is applied (step 44), interference reduction may be initiated, which makes use of the previously stored interference channel information. In step 45 interference reduction is performed by means of selecting antenna weights based on the stored interference channel information relating to a set of the other fixed communication nodes operating in opposite mode of the fixed communication node for which antenna weights are to be selected. Antenna weights may optionally have been pre-computed in a step 43 so that the selection of antenna weights in the step 45 does not have to involve complicated computations of the weights, but instead involves simpler selection from sets of pre-computed antenna weights.

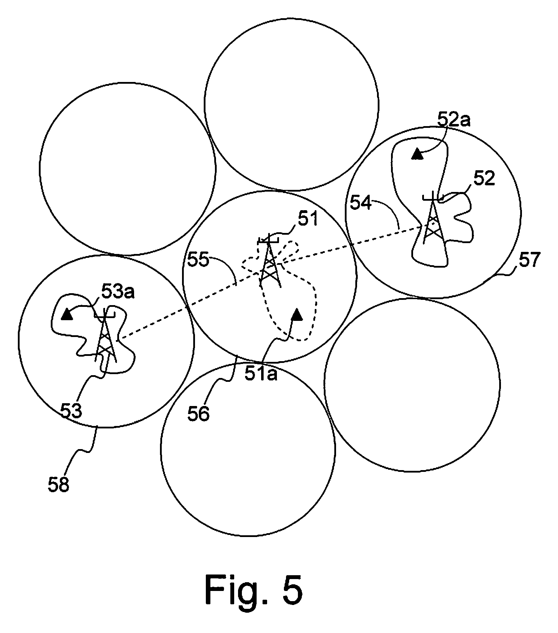

Fig. 5 is a schematic diagram illustrating a number of cells of a wireless communication system in which embodiments of the present invention may be applied. Three of the cells 56-58 are served by base stations 51-53. The cell 56 is operating in opposite mode of the cells 57 and 58. Assume e.g. that the base station 51 is operating in UL mode to receive an uplink signal from a desired transmitting node 51a, (e.g. a UE). The base stations 52 and 53 are operating in DL mode to transmit downlink signals to desired receiving nodes 52a and 53a respectively. In this scenario there is a risk that the downlink transmissions from the base stations 52 and 53 may interfere with the uplink signal from the desired transmitting node 51 a to such an extent that the base station 51 has problem receiving it correctly. However by means of implementing embodiments of the present invention in the base stations 51-53 interference reduction may be achieved. According to embodiments of the present invention interference channel information relating to nearby fixed communication nodes is used to select appropriate antenna weights in the base stations 51-53. The base station 51 is informed e.g. by means of signaling that the base stations 52 and 53 are operating in DL mode when the base station 51 is operating in UL mode. To perform interference reduction between the base station 51 and the base stations 52 and 53, the base station 51 may select receive antenna weights to limit its sensitivity to interference caused by the downlink transmissions of the base stations 52 and 53. To select the antenna weights the base station 51 uses stored interference channel information which may include e.g. directions 54, 55 and/or channel estimates of the interference channels to the base stations 52 and 53. If there are enough degrees of freedom (i.e. enough number of antenna elements) the base station would ideally select antenna weights to place nulls in the directions 54, 55 of the base station 52 and 53, while focus the power of received radio signals in the direction of the desired transmitting node 51 a. The corresponding operations may be performed in the base stations 52 and 53 to select transmit antenna weights that limits (preferably nulls) the transmitted power in the direction of the base station 51 and focus the transmitted power in the direction of the desired receiving nodes 52a and 53a respectively, to thereby reduce the interference caused by the downlink transmissions from the base stations 52 and 53 to the base station 51 operating in UL mode.

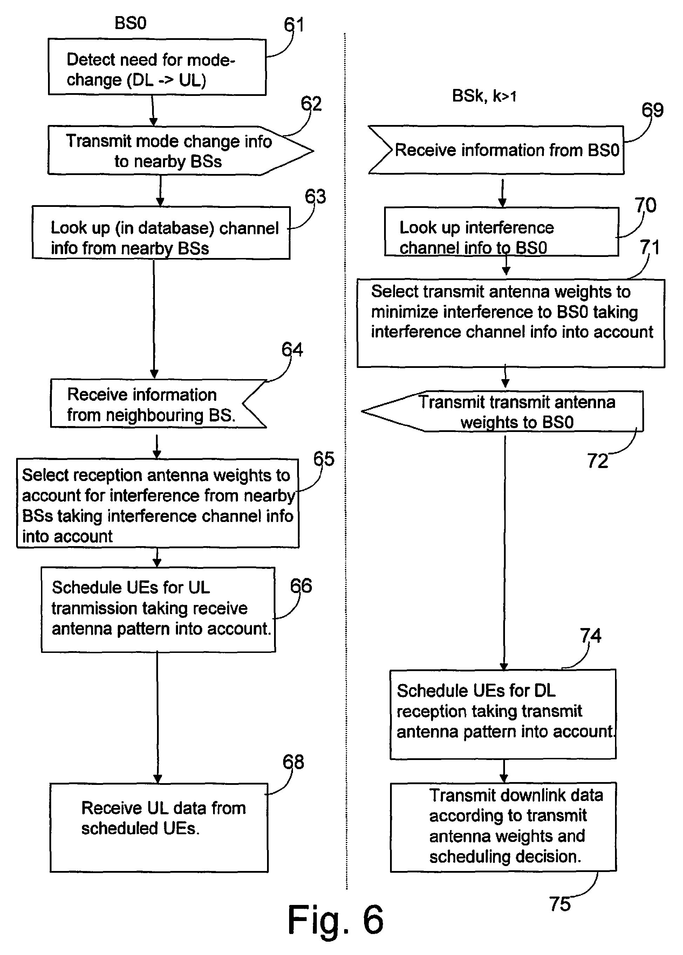

When selecting antenna weights for one fixed communication node it is possible to consider and adapt to antenna weights in other nearby fixed communication nodes operating in opposite mode. Fig. 6 is a schematic flow diagram illustrating interference reduction in a base station BS0 in relation to interference reduction in a set of k (k>1) base stations BSk according to an embodiment of the present invention. In a step 61 the base station BS0 detects a need for mode change from DL mode to UL mode. In a step 62 the base station transmits information on its change of mode to other nearby base stations BSk. The base station BS0 then looks up stored interference channel information relating to the other base stations BSk. In a step 64 the base station BS0 receives information from the other base stations BSk on transmit antenna weights applied in the other base stations. The base station BS0 selects receive antenna weights based on the stored interference channel information and the received information on transmit antenna weights in the base stations BSk in a step 65. Furthermore in this embodiment the base station BS0 schedule UEs for UL transmission taking receive antenna pattern into account, step 66. In a step 68, the base station BS0 receives UL data from the scheduled UEs.

Now considering corresponding actions performed in one of the other base stations BSk, information on the mode change in the base station BS0 is received in a step 69. The base station BSk looks up stored interference channel information relating to the base station BS0, step 70 and then selects transmit antenna weights based on the interference channel information to try to minimize the interference caused to the base station BS0 in a step 71. The selected transmit antenna weights are then transmitted to the base station BS0 in a step 72. Thereby it is possible for the base station BS0 to adapt its selection of receive antenna weights to the transmit antenna weights of the base station BSk. If e.g. the base station BSk was not able to null transmissions in the direction of the base station BS0, the base station BS0 may prioritize to try to null reception in the direction of the base station BSk, rather than nulling reception from other base stations which were able to null their transmissions towards the base station BS0. The base station BSk schedules UEs for DL reception in a step 74 taking the determined transmit antenna weights into account. Then in a step 75 the base station BSk transmits downlink data to the scheduled UEs.

There are several different alternatives for how to select antenna weights and take account of antenna weights of other nearby fixed communication nodes. The problem of selecting antenna weights for a number of different fixed communication nodes can be seen as a joint optimization problem. There are different approaches to solving this joint optimization problem. With a fully distributed approach each fixed communication node is able to select its own antenna weights. With a centralized approach methods similar to the method illustrated in Fig. 4 may be performed in a network node other than the fixed communication nodes comprising the actual antenna elements, such as an operation and maintenance node, or other type of centralized network node. The centralized network node may then perform interference reduction and select antenna weights based on the stored interference channel information for antenna elements of all fixed communication nodes. In a semi-centralized approach there may be one network node that plays a central role in coordinating the selection of antenna weights for a subset of fixed communication nodes. In case of the semi-centralized or distributed approaches the fixed communication nodes may communicate with each other to coordinate antenna weight selection. Such communication between fixed communication nodes may take place over wireless or wireline interfaces. The fixed communication nodes may e.g. exchange channel information, cost functions and/or optimal or suboptimal transmit or receive antenna weights to ascertain global consistency.

The description above focuses on the example where BSs try to avoid interference to and from one another when transmitting to or receiving data from a UE. In a more general context, the invention covers the case where fixed communication nodes try to avoid interference to, and from, one another when transmitting to, or receiving data from, other network nodes which may be fixed or mobile. The core of the invention is that the fixed communication nodes can avoid causing interference to, or receiving interference from, the other fixed communication nodes by means of beamforming or antenna weighting where the antenna weights are based upon measurements or knowledge collected at some point in time, independent of the time when the antenna weights are to be applied. When transmitting data to, or receiving data from, a non-fixed communication node such as a mobile UE the approaches described in the earlier sections can be followed. However, when transmitting data to, or receiving data from, a fixed communication node, that fixed communication node can have taken part in the measurement procedure described above for collecting interference channel information. This is an advantage since it essentially means that the channels to that fixed communication node are known with high precision, and the desired beamforming or antenna weights specific to that fixed communication node can be computed off-line.

From the above description it is apparent that an advantage of embodiments of the present invention is that they allow for interference reduction based on interference channel information relating to fixed communication nodes. This means that the interference channel information may be measured or collected in some other way e.g. at times when the system load is low and then stored for later use when it is desirable to perform the actual interference reduction. The actions to be performed at the time of carrying out the actual interference reduction can thus be made simpler compared to some prior art methods that may involve both measurements and complicated computations that need to be performed quickly. In contrast, according to embodiments of the present invention it is e.g. possible to pre-compute transmit or receive antenna weights in advance to support carrying out interference reduction quickly and easily without heavy computations on-line.

A further advantage is that, compared to prior art methods, the interference reduction based on stored interference channel information relating to fixed communication nodes according to embodiments of the present invention becomes less sensitive to uncertain directions of the desired transmitting or receiving node (which usually is mobile and thus it's direction is more difficult to determine).

By providing efficient mechanisms for interference reduction embodiments of the present invention have the advantage of allowing cells to temporarily change their balance between UL and DL transmissions to satisfy their local needs. Some of the discussed embodiments will limit the interference also in analog parts and hence avoid a saturation problem that might be present in an embodiment that uses only the prior art interference reduction method disclosed in the international patent application WO2008/008013 A1. In WO2008/008013 A1, only actions on the receiver side are considered and the interference reduction is based on receiving specific information regarding the actual data to be transmitted.

Embodiments of the present invention allows for reducing the interference from transmitters to receivers which thus enables the entire network to be dimensioned according to the general UL/DL balance (typically more DL than UL), while still enabling increased UL or DL capacity when required at certain cells.

In the drawings and specification, there have been disclosed typical preferred embodiments of the invention and, although specific terms are employed, they are used in a generic and descriptive sense only and not for purposes of limitation, the scope of the invention being set forth in the following claims.

**Claims**

1. A method in a network node (10, 11, 31) for use in a wireless communications system (16) operating in time division duplex, TDD, mode, the method comprising:

   performing (41) interference channel measurements to estimate at least one interference channel (19) between a fixed communication node (10, 11) and a number of other fixed communication nodes (10,11);
   storing (42) interference channel information (37) on said at least one interference channel (19), wherein the interference channel information (37) includes radio channel estimates derived from the interference channel measurements;
   pre-computing (43) receive antenna weights, that based on the stored interference channel information (37), limit the fixed communication node's (10) sensitivity to interference caused by transmissions from a number of different sets of the other fixed communication nodes (11);
   storing the pre-computed receive antenna weights in a database, such that pre-computed receive antenna weights associated with a selected one of the different sets of the other fixed communication nodes may be applied at a future point in time when the fixed communication node is to perform interference reduction with respect to the selected set of other fixed communication nodes and
   performing (45) interference reduction between the fixed communication node and a set of the other fixed communication nodes when the fixed communication node (10) is operating in uplink mode to receive an uplink signal (17) from a desired transmitting node (12), wherein the interference reduction involves antenna weight selection for a plurality of antenna elements (34) of the fixed communication node and applying receive antenna weights, that based on the stored interference channel information (37), are selected to limit the fixed communication node's sensitivity to interference caused by transmissions from the set of other fixed communication nodes (11).

2. The method according to claim 1, wherein the receive antenna weights are pre-computed for a number of different locations of the desired transmitting node (12) from which the uplink signal (17) is to be received.

3. The method according to claim 1 or 2, wherein the applied receive antenna weights are selected to limit the power of radio signals received from the directions of the set of other fixed communication nodes (11).

4. The method according to any of claims 1-3, wherein the applied receive antenna weights are selected to increase the sensitivity to received radio signals in the direction of the desired transmitting node (12) from which the uplink signal (17) is to be received.

5. The method according to any of claims 1-4, wherein the network node in which the method is performed is the fixed communication node comprising said plurality of antenna elements and wherein the method further comprises receiving from at least one other fixed communication node (11) information regarding transmit antenna weights applied by the at least one other fixed communication node, and wherein the applied receive antenna weights are selected based on the received information regarding transmit antenna weights.

6. The method according to any of claims 1-5, wherein the interference reduction (45) is performed by combination of antenna weight selection for the plurality of antenna elements and scheduling of the desired transmitting node (12) from which the uplink signal (17) is to be received.

7. A method in a network node (10, 11, 31) for use in a wireless communications system (16) operating in time division duplex, TDD, mode, the method comprising:

performing (41) interference channel measurements to estimate at least one interference channel (19) between a fixed communication node (10, 11) and a number of other fixed communication nodes (10,11);

storing (42) interference channel information (37) on said at least one interference channel (19), wherein the interference channel information (37) includes radio channel estimates derived from the interference channel measurements;

pre-computing (43) transmit antenna weights, that based on the stored interference channel information (37), limit the interference caused by downlink transmissions (18) from the fixed communication node (11) to a number of different sets of other fixed communication nodes (10);

storing the pre-computed transmit antenna weights in a database, such that pre-computed transmit antenna weights associated with a selected one of the different sets of other fixed communication nodes may be applied at a future point in time when the fixed communication node is to perform interference reduction with respect to the selected set of other fixed communication nodes;

performing (45) interference reduction between the fixed communication node and a set of the other fixed communication nodes when the fixed communication node (11) is operating in downlink mode to transmit a downlink signal (18) to a desired receiving node (13), wherein the interference reduction involves antenna weight selection for a plurality of antenna elements (34) of the fixed communication node and applying transmit antenna weights, that based on the stored interference channel information (37), limit the interference caused to the set of other fixed communication nodes (10) by the transmission of the downlink signal.

8. The method according to claim 7, wherein the transmit antenna weights are pre-computed for a number of different locations of the desired receiving node (13) to which the downlink signal (18) is to be transmitted.

9. The method according to claim 7 or 8, wherein the applied transmit antenna weights are selected to limit the power of the downlink signal (18) transmitted in the directions of the set of other fixed communication nodes (10).

10. The method according to any of claims 7-9, wherein the applied transmit antenna weights are selected to focus the power of the transmitted downlink signal in the direction of the desired receiving node (13) to which the downlink signal (18) is to be transmitted.

11. The method according to any of claims 7-10, further comprising receiving from at least one other fixed communication node (10) information regarding receive antenna weights applied by the at least one other fixed communication node, and wherein the applied transmit antenna weights are selected based on the received information regarding receive antenna weights.

12. The method according to any of claims 7-11, wherein the interference reduction is performed by combination of antenna weight selection for the plurality of antenna elements and scheduling of the desired receiving node (13) to which the downlink signal (18) is to be transmitted.

13. The method according to any of claims 1-12, wherein the interference channel information (37) includes information on directions to the number of other fixed communication nodes (10,11).

14. A fixed communication node (10, 11, 31) for use in a wireless communications system (16) operating in time division duplex, TDD, mode, wherein the fixed communication node comprises
a plurality of antenna elements (34);
a receiver adapted to receive uplink signals and to measure interference channels;
a channel estimator adapted to estimate at least one interference channel between a fixed communication node (10, 11) and a number of other fixed communication nodes (10,11);
a memory unit (36) for storing interference channel information (37) on said at least one interference channel (19), wherein the interference channel information (37) includes radio channel estimates derived from measurements on signals transmitted by said a number of other fixed communication nodes, and
a processing unit (35) adapted to:

store the interference channel information in the memory unit,
pre-compute receive antenna weights, that based on the stored interference channel information (37), will limit the fixed communication node's sensitivity to interference caused by transmissions from a number of different sets of other fixed communication nodes,
store the pre-computed receive antenna weights in a database in the memory unit (36), such that pre-computed receive antenna weights associated with a selected one of the different sets of other fixed communication nodes may be applied at a future point in time when the fixed communication node is to perform interference reduction with respect to the selected set of other fixed communication node, and to
perform interference reduction between the fixed communication node and a set of the other fixed communication nodes by antenna weight selection based on the stored interference channel information relating to the set of the other fixed communication nodes, wherein the interference reduction, when the fixed communication node is operating in uplink mode to receive an uplink signal from a desired transmitting node, involves applying receive antenna weights, based on the stored interference channel information, which limit the fixed communication node's sensitivity to interference caused by transmissions from the set of other fixed communication node.

15. A fixed communication node (10, 11, 31) for use in a wireless communications system (16) operating in time division duplex, TDD, mode, wherein the fixed communication node comprises
a plurality of antenna elements (34);
a receiver adapted to measure interference channels;
a transmitter adapted to transmit downlink signals;
a channel estimator adapted to estimate at least one interference channel between a fixed communication node (10, 11) and a number of other fixed communication nodes (10,11);
a memory unit (36) for storing interference channel information (37) on said at least one interference channel (19), wherein the interference channel information (37) includes radio channel estimates derived from measurements on signals transmitted by said a number of other fixed communication nodes, and
a processing unit (35) adapted to:

store the interference channel information in the memory unit,
pre-compute transmit antenna weights, based on the stored interference channel information (37), that limit the interference caused by downlink transmissions from the fixed communication node to a number of different sets of other fixed communication nodes,
store the pre-computed transmit antenna weights in a database in the memory unit (36), such that pre-computed transmit antenna weights associated with a selected one of the different sets of other fixed communication nodes may be applied at a future point in time when the fixed communication node is to perform interference reduction with respect to the selected set of other fixed communication nodes,
perform interference reduction between the fixed communication node and a set of the other fixed communication nodes by antenna weight selection based on the stored interference channel information relating to the set of the other fixed communication nodes, wherein the interference reduction, wherein the interference reduction, when the fixed communication node is operating in downlink mode to transmit a downlink signal to a desired receiving nod, involves applying transmit antenna weights, based on the stored interference channel information, which limit the interference caused to the set of other fixed communication nodes by the transmission of the downlink signal.

16. The fixed communication node according to claim 14 or 15, wherein the interference channel information (37) includes information on directions to the number of other fixed communication nodes.

**Patentansprüche**

1. Verfahren in einem Netzwerkknoten (10, 11, 31) zur Verwendung in einem drahtlosen Kommunikationssystem (16), das im Zeitteilungsduplexmodus, TDD, betrieben wird, wobei das Verfahren umfasst:

Durchführen (41) von Interferenzkanalmessungen, um zumindest einen Interferenzkanal (19) zwischen einem festen Kommunikationsknoten (10, 11) und einer Anzahl von anderen festen Kommunikationsknoten (10, 11) zu schätzen,
Speichern (42) von Interferenzkanalinformation (37) über den zumindest einen Interferenzkanal (19), wobei die Interferenzkanalinformation (37) Funkkanalschätzungen einschließt, die aus den Interferenzkanalmessungen abgeleitet sind;

Vorberechnen (43) von Empfangsantennengewichten, die auf der Grundlage von der gespeicherten Interferenzkanalinformation (37) die Empfindlichkeit des festen Kommunikationsknotens (10) gegenüber Interferenz begrenzen, die durch Übertragungen von einer Anzahl von verschiedenen Sätze von den anderen festen Kommunikationsknoten (11) verursacht wird;

Speichern der vorberechneten Empfangsantennengewichte in einer Datenbank, so dass vorberechnete Empfangsantennengewichte, die einem ausgewählten der unterschiedlichen Sätze von anderen festen Kommunikationsknoten zugeordnet sind, auf einen zukünftigen Zeitpunkt angewendet werden können, wenn der feste Kommunikationsknoten eine Interferenzreduzierung in Bezug auf den ausgewählten Satz von anderen festen Kommunikationsknoten ausführen soll; und

Durchführen (45) einer Interferenzreduzierung zwischen dem festen Kommunikationsknoten und einem Satz der anderen festen Kommunikationsknoten, wenn der feste Kommunikationsknoten (10) im Aufwärtsstreckenmodus betrieben wird, um ein Aufwärtsstreckensignal (17) von einem gewünschten Übertragungsknoten (12) zu empfangen, wobei die Interferenzreduzierung eine Antennengewichtsauswahl für mehrere Antennenelemente (34) des festen Kommunikationsknotens und das Anwenden der Empfangsantennengewichte einbezieht, die auf Grundlage der gespeicherten Interferenzkanalinformation (37) ausgewählt sind, um die Empfindlichkeit des festen Kommunikationsknotens gegenüber Interferenz zu begrenzen, die durch Übertragungen von dem Satz von anderen festen Kommunikationsknoten (11) verursacht wird.

2. Verfahren nach Anspruch 1, wobei die Empfangsantennengewichte für eine Anzahl von unterschiedlichen Orten des erwünschten Übertragungsknotens (12), von dem das Aufwärtsstreckensignal (17) empfangen werden soll, vorberechnet werden.

3. Verfahren nach Anspruch 1 oder 2, wobei die angewendeten Empfangsantennengewichte ausgewählt sind, um die Leistung des Funksignals zu begrenzen, das von den Richtungen des Satzes von anderen festen Kommunikationsknoten (11) empfangen wird.

4. Verfahren nach einem der Ansprüche 1 - 3, wobei die angewendeten Empfangsantennengewichte ausgewählt sind, um die Empfindlichkeit gegenüber empfangenen Funksignalen in der Richtung des gewünschten Übertragungsknotens (12) zu erhöhen, von dem das Aufwärtsstreckensignal (17) empfangen werden soll.

5. Verfahren nach einem der Ansprüche 1-4, wobei der Netzwerkknoten in dem das Verfahren durchgeführt wird, der feste Kommunikationsknoten ist, der die mehreren Antennenelemente umfasst, und wobei das Verfahren ferner das Empfangen von Information hinsichtlich von Übertragungsantennengewichten, die von dem mindestens einem anderen festen Kommunikationsknoten angewendet werden, von mindestens einem anderen festen Kommunikationsknoten (11) umfasst, und wobei die angewendeten Empfangsantennengewichte auf Grundlage der empfangenen Information hinsichtlich der Übertragungsantennengewichte ausgewählt werden.

6. Verfahren nach einem der Ansprüche 1-5, wobei die Interferenzreduzierung (45) durch eine Kombination einer Antennengewichtsauswahl für die mehreren Antennenelemente und einer Terminierung des gewünschten Übertragungsknotens (12) durchgeführt wird, von dem das Aufwärtsstreckensignal (17) empfangen werden soll.

7. Verfahren in einem Kommunikationsknoten (10, 11, 31) zur Verwendung in einem drahtlosen Kommunikationssystem (16), das im Zeitteilungsduplexmodus, TDD, betrieben wird, wobei das Verfahren umfasst:

Durchführen (41) von Interferenzkanalmessungen, um zumindest einen Interferenzkanal (19) zwischen einem festen Kommunikationsknoten (10, 11) und einer Anzahl von anderen festen Kommunikationsknoten (10, 11) zu schätzen,

Speichern (42) von Interferenzkanalinformation (37) über den zumindest einen Interferenzkanal (19), wobei die Interferenzkanalinformation (37) Funkkanalschätzungen einschließt, die aus den Interferenzkanalmessungen abgeleitet sind;

Vorberechnen (43) von Empfangsantennengewichten, die auf Grundlage von der gespeicherten Interferenzkanalinformation (37) die Interferenz begrenzen, die durch Abwärtsstreckenübertragungen (18) von dem festen Kommunikationsknoten (11) zu einer Anzahl von verschiedenen Sätzen von anderen festen Kommunikationsknoten (10) verursacht wird;

Speichern der vorberechneten Empfangsantennengewichte in einer Datenbank, so dass vorberechnete Empfangsantennengewichte, die einem ausgewählten der unterschiedlichen Sätze von anderen festen Kommunikationsknoten zugeordnet sind, auf einen zukünftigen Zeitpunkt angewendet werden können, wenn der feste Kommunikationsknoten eine Interferenzreduzierung in Bezug auf den ausgewählten Satz von anderen festen Kommunikationsknoten ausführen soll;

Durchführen (45) einer Interferenzreduzierung zwischen dem festen Kommunikationsknoten und einem Satz der anderen festen Kommunikationsknoten, wenn der feste Kommunikationsknoten (11) im Abwärtsstreckenmodus betrieben wird, um ein Abwärtsstreckensignal (18) zu einem gewünschten Übertragungsknoten (13) zu übertragen, wobei die Interferenzreduzierung eine Antennengewichtsauswahl für mehrere Antennenelemente (34) des festen Kommunikationsknotens und das Anwenden der Empfangsantennengewichte einbezieht, die auf Grundlage der Interferenzkanalinformation (37) die Interferenz begrenzen, die bei dem Satz von anderen festen Kommunikationsknoten (10) durch die Übertragung des Abwärtsstreckensignals verursacht wird.

8.  Verfahren nach Anspruch 7, wobei die Empfangsantennengewichte für eine Anzahl von unterschiedlichen Orten des erwünschten Übertragungsknotens (13), zu dem das Abwärtsstreckensignal (18) übertragen werden soll, vorberechnet werden.

9.  Verfahren nach Anspruch 7 oder 8, wobei die angewendeten Empfangsantennengewichte ausgewählt sind, um die Leistung des Abwärtsstreckenssignals (18) zu begrenzen, das in die Richtungen des Satzes von anderen festen Kommunikationsknoten (10) übertragen wird.

10. Verfahren nach einem der Ansprüche 7-9, wobei die angewendeten Übertragungsantennengewichte ausgewählt sind, um die Leistung des übertragenen Abwärtsstreckensignals in Richtung des erwünschten Empfangsknotens (13) zu fokussieren, zu dem das Abwärtsstreckensignal (18) übertragen werden soll.

11. Verfahren nach einem der Ansprüche 7-10, das ferner das Empfangen von Information hinsichtlich von Empfangsantennengewichten, die von dem mindestens einem anderen festen Kommunikationsknoten angewendet werden, von mindestens einem anderen festen Kommunikationsknoten (10) umfasst, und wobei die angewendeten Empfangsantennengewichte auf Grundlage der empfangenen Information hinsichtlich der Empfangsantennengewichte ausgewählt werden.

12. Verfahren nach einem der Ansprüche 7-11, wobei die Interferenzreduzierung durch eine Kombination einer Antennengewichtsauswahl für die mehreren Antennenelemente und einer Terminierung des gewünschten Übertragungsknotens (13) durchgeführt wird, zu dem das Abwärtsstreckensignal (18) übertragen werden soll.

13. Verfahren nach einem der Ansprüche 1-12, wobei die Interferenzkanalinformation (37) Information über Richtungen zu der Anzahl von anderen festen Kommunikationsknoten (10, 11) einschließt.

14. Fester Kommunikationsknoten (10, 11, 31) zur Verwendung in einem drahtlosen Kommunikationssystem (16), das im Zeitteilungsduplexmodus, TDD, betrieben wird, wobei der feste Kommunikationsknoten umfasst:

mehrere Antennenelemente (34);

einen Empfänger, der eingerichtet ist, um Abwärtsstreckensignale zu empfangen und Interferenzkanäle zu messen;

einen Kanalschätzer, der eingerichtet ist, um zumindest einen Interferenzkanal zwischen einem festen Kommunikationsknoten (10, 11) und einer Anzahl von anderen festen Kommunikationsknoten (10, 11) zu schätzen, eine Speichereinheit (36) zum Speichern von Interferenzkanalinformation (37) über den zumindest einen Interferenzkanal (19), wobei die Interferenzkanalinformation (37) Funkkanalschätzungen einschließt, die aus den Messungen von Signalen abgeleitet sind, die von der einen Anzahl von anderen festen Kommunikationsknoten übertragen werden; und

eine Prozessoreinheit (35), die eingerichtet ist:

die Interferenzkanalinformation in der Speichereinheit zu speichern,

Empfangsantennengewichte vorzuberechnen, die auf Grundlage von der gespeicherten Interferenzkanalinformation (37) die Empfindlichkeit des festen Kommunikationsknotens gegenüber Interferenz begrenzen werden, die durch Übertragungen von einer Anzahl von verschiedenen Sätzen von anderen festen Kommunikationsknoten verursacht wird;

die vorberechneten Empfangsantennengewichte in einer Datenbank in der Speichereinheit (36) zu speichern, so dass vorberechnete Empfangsantennengewichte, die einem ausgewählten der unterschiedlichen Sätze von anderen festen Kommunikationsknoten zugeordnet sind, auf einen zukünftigen Zeitpunkt angewendet werden können, wenn der feste Kommunikationsknoten eine Interferenzreduzierung in Bezug auf den ausgewählten Satz von anderen festen Kommunikationsknoten ausführen soll; und

eine Interferenzreduzierung zwischen dem festen Kommunikationsknoten und einem Satz der anderen festen Kommunikationsknoten durch eine Antennengewichtsauswahl auf Grundlage der gespeicherten Interferenzkanalinformation durchzuführen, die sich auf den Satz der anderen festen Kommunikationsknoten bezieht, wobei die Interferenzreduzierung, wenn der feste Kommunikationsknoten im Aufwärtsstreckenmodus betrieben wird, um ein Aufwärtsstreckensignal von einem gewünschten Übertragungsknoten zu empfangen, das Anwenden von Antennengewichten auf Grundlage von gespeicherter Interferenzkanalinformation, welche die Empfindlichkeit des festen Informationsknotens gegenüber Interferenz begrenzt, die durch Übertragungen von dem Satz von anderen festen Informationsknoten verursacht wird.

15. Fester Kommunikationsknoten (10, 11, 31) zur Verwendung in einem drahtlosen Kommunikationssystem (16), das im Zeitteilungsduplexmodus, TDD, betrieben wird, wobei der feste Kommunikationsknoten umfasst:

mehrere Antennenelemente (34);
einen Empfänger, der eingerichtet ist, Interferenzkanäle zu messen;
einen Sender, der eingerichtet ist, Abwärtsstreckensignale zu übertragen;
einen Kanalschätzer, der eingerichtet ist, um zumindest einen Interferenzkanal zwischen einem festen Kommunikationsknoten (10, 11) und einer Anzahl der anderen festen Kommunikationsknoten (10, 11) zu schätzen,
eine Speichereinheit (36) zum Speichern von Interferenzkanalinformation (37) über den zumindest einen Interferenzkanal (19), wobei die Interferenzkanalinformation (37) Funkkanalschätzungen einschließt, die aus den Messungen von Signalen abgeleitet sind, die von der einen Anzahl von anderen festen Kommunikationsknoten übertragen werden; und
eine Prozessoreinheit (35), die eingerichtet ist:

die Interferenzkanalinformation in der Speichereinheit zu speichern,
Empfangsantennengewichte vorzuberechnen, die auf Grundlage von der gespeicherten Interferenzkanalinformation (37) die Interferenz begrenzen, die durch Abwärtsstreckenübertragungen von den festen Kommunikationsknoten zu einer Anzahl von verschiedenen Sätzen von anderen festen Kommunikationsknoten verursacht wird;
die vorberechneten Empfangsantennengewichte in einer Datenbank (36) zu speichern, so dass vorberechnete Empfangsantennengewichte, die einem ausgewählten der unterschiedlichen Sätze von anderen festen Kommunikationsknoten zugeordnet sind, auf einen zukünftigen Zeitpunkt angewendet werden können, wenn der feste Kommunikationsknoten eine Interferenzreduzierung in Bezug auf den ausgewählten Satz von anderen festen Kommunikationsknoten ausführen soll; und
eine Interferenzreduzierung zwischen dem festen Kommunikationsknoten und einem Satz der anderen festen Kommunikationsknoten durch eine Antennengewichtsauswahl auf Grundlage der gespeicherten Interferenzkanalinformation durchzuführen, die sich auf den Satz der anderen festen Kommunikationsknoten bezieht, wobei die Interferenzreduzierung, wenn der feste Kommunikationsknoten im Abwärtsstreckenmodus betrieben wird, um ein Abwärtsstreckensignal zu einem gewünschten Empfangsknoten zu übertragen, das Anwenden von Antennengewichten einbezieht, die auf Grundlage von der gespeicherten Interferenzkanalinformation , die Interferenz begrenzen, die bei dem Satz von anderen festen Kommunikationsknoten durch die Übertragung des Abwärtsstreckensignals verursacht wird.

16. Fester Übertragungsknoten nach Anspruch 14 oder 15, wobei die Interferenzkanalinformation (37) Information über Richtungen zu der Anzahl von anderen festen Kommunikationsknoten einschließt.

## Revendications

1. Procédé dans un noeud de réseau (10, 11, 31) à utiliser dans un système de communications sans fil (16) fonctionnant dans un mode de duplexage par répartition dans le temps, DRT, le procédé comprenant :

l'exécution (41) de mesures de canal d'interférence pour évaluer au moins un canal d'interférence (19) entre un noeud de communication fixe (10, 11) et un certain nombre d'autres noeuds de communication fixes (10, 11) ;
le stockage (42) d'informations de canal d'interférence (37) sur ledit au moins un canal d'interférence (19), dans lequel les informations de canal d'interférence (37) incluent des évaluations de canal radio obtenues à partir des mesures de canal d'interférence ;
le précalcul (43) de pondérations d'antenne de réception, qui sur la base des informations de canal d'interférence stockées (37), limitent la sensibilité du noeud de communication fixe (10) à des interférences provoquées par des émissions en provenance d'un certain nombre de différents ensembles des autres noeuds de communication fixes (11) ;

le stockage des pondérations d'antenne de réception précalculées dans une base de données, de sorte que des pondérations d'antenne de réception précalculées associées à un ensemble sélectionné des ensembles différents des autres noeuds de communication fixes peuvent être appliquées à un point futur dans le temps lorsque le noeud de communication fixe doit effectuer une réduction d'interférence en ce qui concerne l'ensemble sélectionné d'autres noeuds de communication fixes, et

l'exécution (45) d'une réduction d'interférence entre le noeud de communication fixe et un ensemble des autres noeuds de communication fixes lorsque le noeud de communication fixe (10) fonctionne dans un mode de liaison montante pour recevoir un signal de liaison montante (17) en provenance d'un noeud d'émission souhaité (12), dans lequel la réduction d'interférence implique la sélection de pondération d'antenne pour une pluralité d'éléments d'antenne (34) du noeud de communication fixe et l'application de pondérations d'antenne de réception, qui sur la base des informations de canal d'interférence stockées (37), sont sélectionnées pour limiter la sensibilité du noeud de communication fixe à des interférences provoquées par des émissions en provenance de l'ensemble d'autres noeuds de communication fixes (11).

2. Procédé selon la revendication 1, dans lequel les pondérations d'antenne de réception sont précalculées pour un certain nombre d'emplacements différents du noeud d'émission souhaité (12) à partir duquel le signal de liaison montante (17) doit être reçu.

3. Procédé selon la revendication 1 ou 2, dans lequel les pondérations d'antenne de réception appliquées sont sélectionnées pour limiter la puissance de signaux radio reçus en provenance des directions de l'ensemble d'autres noeuds de communication fixes (11).

4. Procédé selon l'une quelconque des revendications 1 à 3, dans lequel les pondérations d'antenne de réception appliquées sont sélectionnées pour augmenter la sensibilité à des signaux radio reçus dans la direction du noeud d'émission souhaité (12) à partir duquel le signal de liaison montante (17) doit être reçu.

5. Procédé selon l'une quelconque des revendications 1 à 4, dans lequel le noeud de réseau dans lequel le procédé est effectué est le noeud de communication fixe comprenant ladite pluralité d'éléments d'antenne et dans lequel le procédé comprend en outre la réception en provenance d'au moins un autre noeud de communication fixe (11) d'informations concernant des pondérations d'antenne d'émission appliquées par l'au moins un autre noeud de communication fixe, et dans lequel les pondérations d'antenne de réception appliquées sont sélectionnées sur la base des informations reçues concernant les pondérations d'antenne d'émission.

6. Procédé selon l'une quelconque des revendications 1 à 5, dans lequel la réduction d'interférence (45) est effectuée par la combinaison de sélection de pondération d'antenne pour la pluralité d'éléments d'antenne et par la planification du noeud d'émission souhaité (12) en provenance duquel le signal de liaison montante (17) doit être reçu.

7. Procédé dans un noeud de réseau (10, 11, 31) à utiliser dans un système de communications sans fil (16) fonctionnant dans un mode de duplexage par répartition dans le temps, DRT, le procédé comprenant :

l'exécution (41) de mesures de canal d'interférence pour évaluer au moins un canal d'interférence (19) entre un noeud de communication fixe (10, 11) et un certain nombre d'autres noeuds de communication fixes (10, 11) ;

le stockage (42) d'informations de canal d'interférence (37) sur ledit au moins un canal d'interférence (19), dans lequel les informations de canal d'interférence (37) incluent des évaluations de canal radio obtenues à partir des mesures de canal d'interférence ;

le précalcul (43) de pondérations d'antenne d'émission, qui sur la base des informations de canal d'interférence stockées (37), limitent les interférences provoquées par des émissions en liaison descendante (18) en provenance du noeud de communication fixe (11) à destination d'un certain nombre d'ensembles différents d'autres noeuds de communication fixes (10) ;

le stockage des pondérations d'antenne d'émission précalculées dans une base de données, de sorte que des pondérations d'antenne d'émission précalculées associées à un ensemble sélectionné des ensembles différents d'autres noeuds de communication fixes peuvent être appliquées à un point futur dans le temps lorsque le noeud de communication fixe doit effectuer une réduction d'interférence en ce qui concerne l'ensemble sélectionné d'autres noeuds de communication fixes ;

l'exécution (45) d'une réduction d'interférence entre le noeud de communication fixe et un ensemble des autres noeuds de communication fixes lorsque le noeud de communication fixe (11) fonctionne dans le mode de liaison descendante pour émettre un signal de liaison descendante (18) vers un noeud de réception souhaité (13), dans lequel la réduction d'interférence implique la sélection de pondération d'antenne pour une pluralité d'éléments d'antenne (34) du noeud de communication fixe et l'application des pondérations d'antenne d'émission, qui sur la base des informations de canal d'interférence stockées (37), limitent les interférences provoquées à l'ensemble d'autres noeuds de communication fixes (10) par l'émission du signal de liaison descendante.

8. Procédé selon la revendication 7, dans lequel les pondérations d'antenne d'émission sont précalculées pour un certain nombre d'emplacements différents du noeud de réception souhaité (13) vers lequel le signal de liaison descendante (18) doit être émis.

9. Procédé selon la revendication 7 ou 8, dans lequel les pondérations d'antenne d'émission appliquées sont sélectionnées pour limiter la puissance du signal de liaison descendante (18) émis dans les directions de l'ensemble d'autres noeuds de communication fixes (10).

10. Procédé selon l'une quelconque des revendications 7 à 9, dans lequel les pondérations d'antenne d'émission appliquées sont sélectionnées pour concentrer la puissance du signal de liaison descendante émis dans la direction du noeud de réception souhaité (13) vers lequel le signal de liaison descendante (18) doit être émis.

11. Procédé selon l'une quelconque des revendications 7 à 10, comprenant en outre la réception à partir d'au moins un autre noeud de communication fixe (10) d'informations concernant des pondérations d'antenne de réception appliquées par l'au moins un autre noeud de communication fixe, et dans lequel les pondérations d'antenne d'émission appliquées sont sélectionnées sur la base des informations reçues concernant des pondérations d'antenne de réception.

12. Procédé selon l'une quelconque des revendications 7 à 11, dans lequel la réduction d'interférence est effectuée par la combinaison de sélection de pondération d'antenne pour la pluralité d'éléments d'antenne et par la planification du noeud de réception souhaité (13) vers lequel le signal de liaison descendante (18) doit être transmis.

13. Procédé selon l'une quelconque des revendications 1 à 12, dans lequel les informations de canal d'interférence (37) incluent des informations sur des directions vers le certain nombre d'autres noeuds de communication fixes (10, 11).

14. Noeud de communication fixe (10, 11, 31) à utiliser dans un système de communications sans fil (16) fonctionnant dans un mode de duplexage par répartition dans le temps, DRT, dans lequel le noeud de communication fixe comprend

une pluralité d'éléments d'antenne (34) ;
un récepteur conçu pour recevoir des signaux de liaison montante et pour mesurer des canaux d'interférence ;
un dispositif d'évaluation de canal conçu pour évaluer au moins un canal d'interférence entre un noeud de communication fixe (10, 11) et un certain nombre d'autres noeuds de communication fixes (10, 11) ;
une unité de mémoire (36) pour stocker des informations de canal d'interférence (37) sur ledit au moins un canal d'interférence (19), dans lequel les informations de canal d'interférence (37) incluent des évaluations de canal radio obtenues à partir de mesures sur des signaux émis par ledit certain nombre d'autres noeuds de communication fixes, et
une unité de traitement (35) conçue pour :

stocker les informations de canal d'interférence dans l'unité de mémoire,
précalculer des pondérations d'antenne de réception, qui sur la base des informations de canal d'interférence stockées (37), vont limiter la sensibilité du noeud de communication fixe à des interférences provoquées par des émissions en provenance d'un certain nombre d'ensembles différents d'autres noeuds de communication fixes,
stocker les pondérations d'antenne de réception précalculées dans une base de données dans l'unité de mémoire (36), de sorte que des pondérations d'antenne de réception précalculées associées à un ensemble sélectionné des ensembles différents d'autres noeuds de communication fixes peuvent être appliquées à un point futur dans le temps lorsque le noeud de communication fixe doit effectuer une réduction d'interférence en ce qui concerne l'ensemble sélectionné d'autres noeuds de communication fixes, et pour
effectuer une réduction d'interférence entre le noeud de communication fixe et un ensemble des autres noeuds de communication fixes par une sélection de pondérations d'antenne sur la base des informations de canal d'interférence stockées se rapportant à l'ensemble des autres noeuds de communication fixes, dans lequel la réduction d'interférence, lorsque le noeud de communication fixe fonctionne dans le mode de liaison montante pour recevoir un signal de liaison montante en provenance d'un noeud d'émission souhaité, implique l'application de pondérations d'antenne de réception, sur la base des informations de canal d'interférence stockées, qui limitent la sensibilité du noeud de communication fixe à une interférence provoquée par des émissions en provenance de l'ensemble d'autres noeuds de communication fixes.

15. Noeud de communication fixe (10, 11, 31) à utiliser dans un système de communications sans fil (16) fonctionnant dans un mode de duplexage par répartition dans le temps, DRT, dans lequel le noeud de communication fixe comprend

une pluralité d'éléments d'antenne (34) ;
un récepteur conçu pour mesurer des canaux d'interférence ;
un émetteur conçu pour émettre des signaux de liaison descendante ;
un dispositif d'évaluation de canal conçu pour évaluer au moins un canal d'interférence entre un noeud de communication fixe (10, 11) et un certain nombre d'autres noeuds de communication fixes (10, 11) ;
une unité de mémoire (36) pour stocker des informations de canal d'interférence (37) sur ledit au moins un canal d'interférence (19), dans lequel les informations de canal d'interférence (37) incluent des évaluations de canal radio obtenues à partir de mesures sur des signaux émis par ledit certain nombre d'autres noeuds de communication fixes, et
une unité de traitement (35) conçue pour :

stocker les informations de canal d'interférence dans l'unité de mémoire,
précalculer des pondérations d'antenne d'émission, sur la base des informations de canal d'interférence stockées (37), qui limitent les interférences provoquées par des émissions en liaison descendante en provenance du noeud de communication fixe à destination d'un certain nombre d'ensembles différents d'autres noeuds de communication fixes,
stocker les pondérations d'antenne d'émission précalculées dans une base de données dans l'unité de mémoire (36), de sorte que des pondérations d'antenne d'émission précalculées associées à un ensemble sélectionné des ensembles différents d'autres noeuds de communication fixes peuvent être appliquées à un point futur dans le temps lorsque le noeud de communication fixe doit effectuer une réduction d'interférence en ce qui concerne l'ensemble sélectionné d'autres noeuds de communication fixes,
effectuer une réduction d'interférence entre le noeud de communication fixe et un ensemble des autres noeuds de communication fixes par une sélection de pondération d'antenne sur la base des informations de canal d'interférence stockées se rapportant à l'ensemble des autres noeuds de communication fixes, dans lequel la réduction d'interférence, dans lequel la réduction d'interférence, lorsque le noeud de communication fixe fonctionne dans un mode de liaison descendante pour émettre un signal de liaison descendante vers un noeud de réception souhaité, implique l'application de pondérations d'antenne d'émission, sur la base des informations de canal d'interférence stockées, qui limitent les interférences provoquées à l'ensemble d'autres noeuds de communication fixes par l'émission du signal de liaison descendante.

16. Noeud de communication fixe selon la revendication 14 ou 15, dans lequel les informations de canal d'interférence (37) incluent des informations sur des directions vers le certain nombre d'autres noeuds de communication fixes.

# Fig. 1

# Fig. 2

FIXED COMMUNICATION NODE

Fig. 3

Fig. 4

Fig. 5

BS0

61
Detect need for mode-change (DL -> UL)

62
Transmit mode change info to nearby BSs

63
Look up (in database) channel info from nearby BSs

64
Receive information from neighbouring BS.

65
Select reception antenna weights to account for interference from nearby BSs taking interference channel info into account

66
Schedule UEs for UL tranmission taking receive antenna pattern into account.

68
Receive UL data from scheduled UEs.

BSk, k>1

69
Receive information from BS0

70
Look up interference channel info to BS0

71
Select transmit antenna weights to minimize interference to BS0 taking interference channel info into account

72
Transmit transmit antenna weights to BS0

74
Schedule UEs for DL reception taking transmit antenna pattern into account.

75
Transmit downlink data according to transmit antenna weights and scheduling decision.

Fig. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008008013 A1

- WO 2008008013 A

**Non-patent literature cited in the description**

- **CHEN, CHIUNG-JANG ; WANG, LI-CHUN.** Suppressing Opposite-Direction Interference in TDD/CDMA Systems With Asymmetric Traffic by Antenna Beamforming. *IEEE Transactions on Vehicular Technology,* July 2004, vol. 53 (4

- **STOICA ; PETRE ; MOSES ; RANDOLPH.** INTRODUCTION TO SPECTRAL ANALYSIS. Prentice-Hall, 1997
- **LI, JIAN ; STOICA, PETRE ; WANG, ZHISONG.** On Robust Capon Beamforming and Diagonal Loading. *IEEE Transactions on Signal Processing,* July 2003, vol. 51 (7